Europäisches Patentamt

European Patent Office

Office européen des brevets

(19)

(11) Veröffentlichungsnummer : **0 160 638**
**B1**

(12)　　　　　EUROPÄISCHE PATENTSCHRIFT

(45) Veröffentlichungstag der Patentschrift :
12.11.86

(21) Anmeldenummer : 83900259.9

(22) Anmeldetag : 07.01.83

(86) Internationale Anmeldenummer :
PCT/AT 83/00002

(87) Internationale Veröffentlichungsnummer :
WO/8402765 (19.07.84 Gazette 84/17)

(51) Int. Cl.⁴ : **F 24 D 13/04**, G 05 D 23/19

(54) STEUERUNGSSYSTEM FUER EINE KOMBINATIONSHEIZUNG.

(43) Veröffentlichungstag der Anmeldung :
13.11.85 Patentblatt 85/46

(45) Bekanntmachung des Hinweises auf die Patenterteilung : 12.11.86 Patentblatt 86/46

(84) Benannte Vertragsstaaten :
AT BE DE FR GB NL SE

(56) Entgegenhaltungen :
BE-A- 841 894
DE-A- 2 021 579
DE-A- 2 738 036
FR-A- 2 505 989

(73) Patentinhaber : SCHWARZ, Anton
Hocheggstrasse 354
A-6100 Seefeld (AT)

(72) Erfinder : SCHWARZ, Anton
Hocheggstrasse 354
A-6100 Seefeld (AT)

(74) Vertreter : Hofinger, Engelbert et al
Torggler-Hofinger Wilhelm-Greil-Strasse 16
A-6020 Innsbruck (AT)

## Beschreibung

Die Erfindung bezieht sich auf ein Steuerungssystem für eine Kombinationsheizung, insbesondere Gas- oder Oel-Elektroheizung, mit einer Zentralheizung mit Brenner und Kessel und mehreren daran angeschlossenen Radiatoren od. dgl., die zumindestens teilweise mit einem elektrischen Heizelement versehen sind und Schalter und Ventile aufweisen, mittels denen wahlweise ein Radiator mit dem Heizelement als Einzelheizkörper oder über den Kessel als Teil der Zentralheizung betätigbar ist.

Seit geraumer Zeit ist die Zentralheizung mit Radiatoren das mit Abstand beliebteste Heizungssystem für Ein- und Mehrfamilienhäuser im europäischen Raum. Anfangs wurden Gußheizkörper installiert, später ging man auf Stahlheizkörper über, und seit geraumer Zeit bietet der Markt auch zusätzliche Aluminiumradiatoren an.

Bei der Entwicklung von Heizungsanlagen hat man bis zur Energieverteuerung der 70er-Jahre alle Überlegungen nur in Richtung Vollautomatisierung und Bequemlichkeit angestellt. Für Kostenvergleiche wurden vor allem Investitionskosten in Betracht gezogen, denn die Anschaffungskosten standen in einem wesentlich anderen Verhältnis zu den Betriebskosten als heute. Erst die Energiepreissteigerungen der letzten Jahre zwangen zu neuen, energiesparenden Überlegungen.

Die erste und einfachste Möglichkeit, die natürlich genützt wurde, war, bei der bestehenden Zentralheizung die Heizkörperventile zurückzudrehen sowie Thermostatventile einzusetzen und die Heizkesseltemperatur zu reduzieren. Weiters wurden von der Außentemperatur abhängige Raumregelungen eingesetzt. Als Sofortmaßnahme hat man in der Übergangszeit zu elektrischen Behelfsheizungen gegriffen. Wesentliche Einsparungen konnten bei dem Austausch von Ölbrennern erzielt werden.

Lösungen, wie der Einbau einer Fußbodenheizung, konnten nicht gänzlich befriedigen, da eine derartige Heizung sich beispielsweise nur mit stundenlangen Verzögerungen regeln läßt. Aufgrund ihrer großen Wärmeträgermassen ist sie nicht in der Lage, sich dem normalen Tagestemperaturverlauf rasch anzupassen, ganz abgesehen von der Auswirkung starker Temperaturveränderungen infolge von Sonneneinstrahlung oder Föhn bzw. von Kälteeinbrüchen.

Die Nachteile hinsichtlich der Regelbarkeit sind auch bei den beliebten Kachelöfen festzustellen.

Die euphorischen Erwartungen, die in Alternativheizsysteme, wie Solaranlagen und Wärmepumpen gesetzt wurden, wurden zum Großteil enttäuscht, da die Amortisationszeiten und die Heizkostenersparnis weit hinter diesen Erwartungen zurücklagen.

Zusammenfassen läßt sich sagen, daß auf kurze Sicht wesentliche Heizkostenersparnis nicht mit alternativen Heizsystemen zu erzielen ist, sondern durch den gezielteren Energieeinsatz an sich herkömmlicher Wärmespender im Zentralheizungssystem. Der Wirkungsgrad einer Zentralheizung ist bei geringem Raumwärmebedarf sehr unwirtschaftlich, bedingt durch die hohen Bereitstellungs- und Wärmetransportverluste. Man heizt daher am Anfang und am Ende der Heizperiode billiger mit direkt beheizten Elektroradiatoren.

Ein Schritt in dieser Richtung war es, einen Radiator, der an ein Zentralheizungssystem anschließbar war, mit einem Widerstandsheizer zu versehen.

Auf diese Art und Weise konnte der Radiator einmal als Teil der Zentralheizungsanlage fungieren, und er konnte in der Übergangszeit, vor oder nachdem es notwendig war, das ganze Haus zu heizen, als Einzelheizkörper Verwendung finden.

Aufgabe der Erfindung ist es, ein Steuerungssystem für Kombinationsheizungen dieser Art zu schaffen, sodaß die Heizung in optimaler Weise den jeweils herrschenden Temperaturbedingungen mit dem billigsten Energieeinsatz automatisch entsprechen kann. Weiters soll auch ein wirtschaftlicher Betrieb im Hinblick auf die genutzten Räume möglich sein.

Dies wird erreicht durch einen auf ein Signal eines Temperaturfühlers und vorzugsweise eines Rechners ansprechenden automatischen Umschalter, an den der Brenner, die elektrisch steuerbaren Ventile der Radiatoren und die elektrischen Heizelemente angeschlossen sind.

Vorteilhaft ist vorgesehen, daß der Temperaturfühler ein Außentemperaturfühler ist.

Aus der DE-A-27 38 036 sind Radiatoren bekannt, die mittels Heizstäben elektrisch beheizbar sind. Die Heizstäbe sind zu diesem Zweck an das elektrische Netz des Hauses angeschlossen.

Gleichzeitig sind die Radiatoren an den Kessel einer Zentralheizung angeschlossen und werden von der Zentralheizung mit Warmwasser versorgt. Raumthermostaten erlauben es, die Stromzufuhr zu den Heizstäben einzeln zu steuern.

Der Betrieb der Anlage erfolgt dermaßen, daß die Heizgrundlast von der Zentralheizung übernommen wird und der je nach Raum verschiedene zusätzliche Wärmebedarf durch Inbetriebnahme der elektrisch beheizten Heizstäbe geliefert wird.

In der genannten Schrift wird dann noch darauf hingewiesen, daß diese Radiatoren ebenso entweder als reines Zentralheizungselement, wie auch als ausschließlich mittels eines elektrisch beheizten Heizstabes betriebenes Heizelement ausgestaltet sein können. Ein Umschalten von einer Betriebsart auf die andere ist nicht vorgesehen.

Die Steuerung des Umschalters kann in direkter Abhängigkeit vom Temperaturfühler erfolgen, d. h. wird eine gewisse Mindesttemperatur erreicht, schaltet der Umschalter die Zentralheizung ein, und wenn die Temperatur wieder auf einen gewissen Wert angestiegen ist, wird vom Umschalter der Brenner der Zentralheizung abgeschaltet und es werden die Ventile an den Radiatoren geschlossen, sodaß diese als Einzelheizkörper mit Elektroheizung in Funktion treten können.

Ist zusätzlich zum Temperaturfühler ein Wirkungsgradrechner vorgesehen, so kann dieser auch eine gewünschte Absenkung in einzelnen Räumen des Heizobjektes und Außentemperaturschwankungen berücksichtigen, d. h. wenn genügend Räume nicht oder nicht voll beheizt werden sollen, ist es unter Umständen günstiger, erst bei einer noch niederen Temperatur oder mit einer Zeitverzögerung von der Einzelheizung auf die Zentralheizung umzuschalten, und dadurch immer den kostengünstigsten Energieeinsatz zu wählen.

Die dritte Möglichkeit wäre die, daß direkt, ohne Temperaturfühler für die Außentemperatur, aufgrund der in den einzelnen Räumen gewünschten Temperatur und aufgrund des Energieverbrauches die Umschaltung von Zentralheizung auf Einzelheizung verursacht wird.

Mit dem erfindungsgemäßen Steuerungssystem wird eine vollautomatische Steuerung des kompletten Heizsystems erzielt. Ausgehend von der warmen Jahreszeit ergibt sich folgende Funktionsweise des Steuerungssystems. Der automatische Umschalter hat den Brenner ausgeschaltet, die Zentralheizung ist außer Betrieb, und ebenso die einzelnen Elektroheizungen. In den verschiedenen Räumen, in denen sich die Radiatoren der Zentralheizung mit Elektroheizung befinden, sind ebenfalls Temperaturfühler angeordnet, die das Ein- und Ausschalten des jeweiligen elektrischen Heizelementes steuern. Diese Temperaturfühler können unmittelbar am Radiator angeordnet sein. Weiters können die Radiatoren mit Schaltern versehen sein, die die Elektroheizung prinzipiell ausschalten oder einen gewissen Temperaturwert angeben, bei dem sich der Radiator als Einzelheizkörper einschalten soll.

Die Radiatoren können in herkömmlicher Art und Weise mit einem Thermostat versehen sein, der bei Erreichung einer eingestellten Maximaltemperatur das elektrische Heizelement, beispielsweise einen Widerstandsheizer, wieder ausschaltet.

Sinkt die Außentemperatur weiter und erreicht eine vorher im Steuerungssystem eingestellte untere Temperatur, schaltet der automatische Umschalter sämtliche Elektroheizungen der einzelnen Radiatoren aus und den Brenner der Zentralheizungsanlage ein. Die komplette Heizanlage funktioniert fortan wie eine normale Zentralheizung.

Der Zeitpunkt der Umschaltung kann jedoch, wie gesagt, durch einen Wirkungsgradrechner korrigiert werden. Das heißt, wenn die Außentemperatur einen niederen Wert erreicht, bei dem an sich die Zentralheizung eingeschaltet werden müßte, jedoch mehrere Räume im Heizobjekt abgesenkt sind, bzw. es gewünscht wird, daß eine Anzahl von Radiatoren überhaupt nicht in Betrieb genommen wird, kann die Umschaltung vom Rechner verzögert werden. Das heißt, die Zentralheizung wird beispielsweise anstatt bei den ursprünglich eingegebenen 0 °C erst bei —3 °C eingeschaltet. Ebenso werden durch den Wirkungsgradrechner unwirtschaftliche Umschaltungen bei kurzen Temperaturschwankungen verhindert.

Steigt die Außentemperatur wieder an, erfolgt wieder durch den automatischen Umschalter ein Abschalten der Zentralheizung und des Brenners und eine Freigabe der Widerstandsheizer, die individuell in den einzelnen Räumen in Betrieb gesetzt werden können.

Jeder Radiator kann beispielsweise auch mit einem Schalter in Verbindung sein, der diesen abschaltet, wenn das Fenster geöffnet wird. Eine andere Möglichkeit, die beispielsweise in der Hotellerie zur Anwendung kommen wird, wäre, die einzelnen Radiatoren so zu steuern, daß diese ausgeschaltet werden oder ihre Temperatur abgesenkt wird, wenn der Schlüssel des jeweiligen Zimmers in der Schlüsselzentrale abgegeben wird.

Der erste Vorteil des erfindungsgemäßen Steuerungssystems ist der, daß die gesamte Steuerung der Heizanlage vollautomatisch bei höchster Wirtschaftlichkeit abläuft, diesbezüglich also auf jegliche Wartung verzichtet werden kann.

Weiters wird durch den umweltfreundlichen Elektrobetrieb Betrieb der kritische Bereich bei Kesseltemperaturen unter 35 °C im Niedertemperaturbereich vermieden.

Dies führt sonst zu schlechter Verbrennung, Verrußung, zu einem Schwitzen des Kessels und zur Kaminversottung. Bei dem erfindungsgemäßen Steuerungssystem wird der Brenner in diesem Bereich nicht angefahren, sondern die Heizung automatisch von den elektrischen Heizelementen übernommen.

Bei dem erfindungsgemäßen Steuerungssystem kann als Folge somit auch auf ein Mischventil mit Vor- und Rücklaufvermischung für das Heizwasser verzichtet werden. Dadurch sind auch die Bereitstellungsverluste auf ein Minimum reduziert, ebenso ist eine Pufferspeicherung im Niedertemperaturbereich nicht mehr notwendig.

Weiters ist vorteilhaft vorgesehen, daß die Radiatoren mit einer Frostschutzsicherung versehen sind. Dies trägt wesentlich zur Wartungsfreiheit der Zentralheizung bei der Raumtemperaturabsenkung bei.

Ein weiteres Ausführungsbeispiel der Erfindung sieht vor, daß ein Stunden- oder Stromzähler für einen einzelnen oder mehrere Widerstandsheizer vorgesehen ist. Dies kann z. B. besonders in der Hotellerie Anwendung finden, wo es an extrem kalten Tagen während der Sommersaison, an denen kein Heizungszuschlag berechnet wird, dem Gast freigestellt ist, den Radiator als Einzelheizkörper einzusetzen oder nicht.

Ein weiteres Ausführungsbeispiel der Erfindung sieht vor, daß die Zeitschaltuhr jeweils am Radiator angeordnet ist.

Vorteilhaft ist jeder Radiator mit einem Thermostat versehen, der an den Widerstandsheizer und/oder an das Ventil für den Zentralheizungsanschluß angeschlossen ist.

Nachfolgend wird ein Ausführungsbeispiel der Erfindung anhand der Figuren der beiliegenden Zeichnungen eingehend beschrieben.

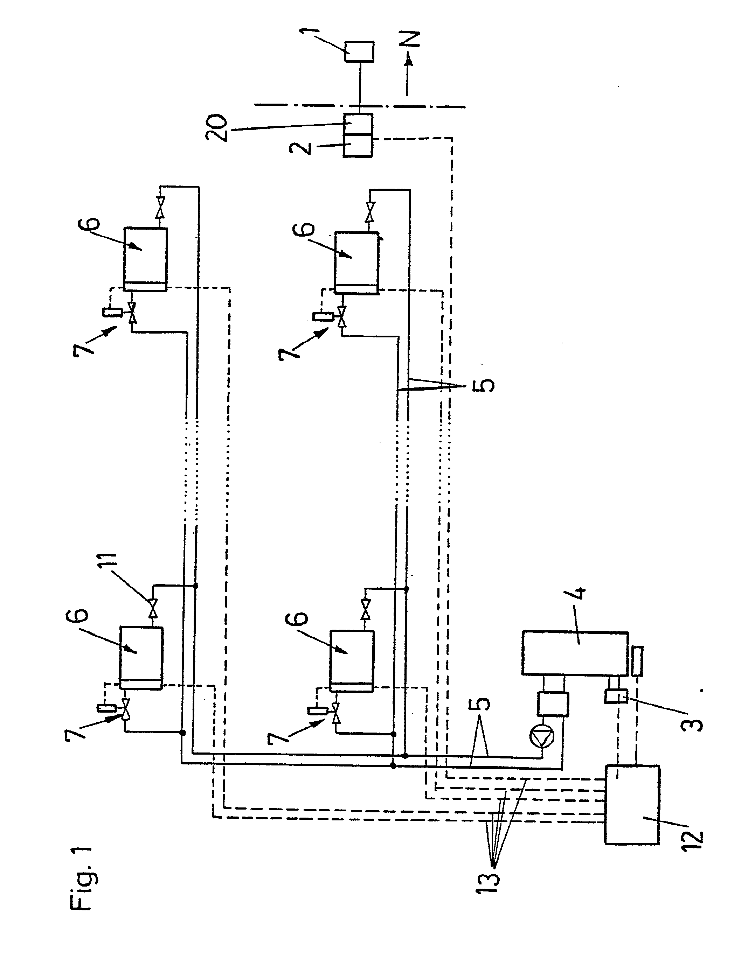

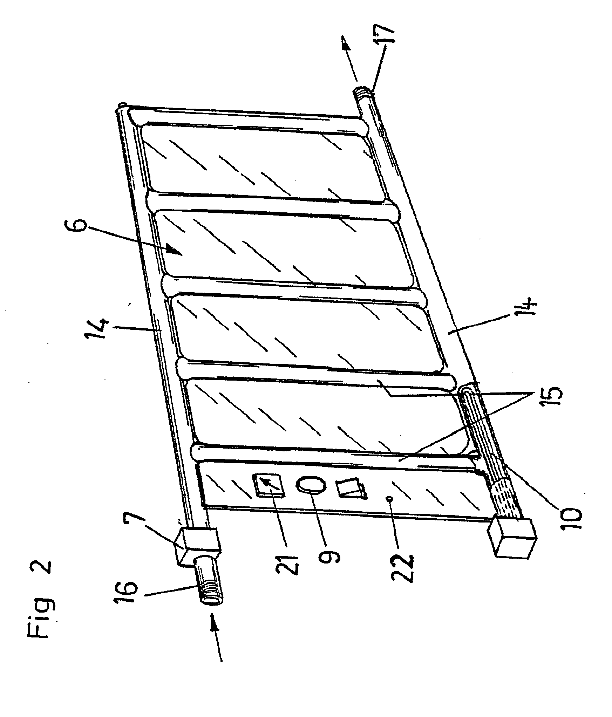

Die Fig. 1 zeigt ein Schaltdiagramm des erfindungsgemäßen Steuerungssystems, die Fig. 2 ein schematisch gehaltenes Schaubild eines erfindungsgemäß einsetzbaren Radiators.

Der Temperaturfühler 1 wird vorteilhaft an der Außenseite des Gebäudes angebracht. Der Temperaturfühler 1 kann beispielsweise ein NTC-Widerstand oder auch ein Thermostat sein. Die vom Temperaturfühler 1 aufgenommene Information wird zum Umschalter 2 direkt oder über den Rechner 20 indirekt weitergegeben, der das gesamte Heizungssystem entweder auf Zentralheizung mit Kesselbetrieb oder generell auf Elektroheizung oder individuell auf Elektroheizung schaltet.

Bei sehr niederen Temperaturen wird der Umschalter 2 den Brenner 3 einschalten, der den Kessel 4 aufheizt und das Warmwasser über Leitungen 5 den Radiatoren 6 in den verschiedenen Räumen zuführt. Die Radiatoren 6 sind dabei mit elektrisch ansteuerbaren Ventilen 7 versehen. Die Ventile 7 sind über Leitungen 13 mit dem Umschalter 2 verbunden.

Steigt die Temperatur an, wird der Umschalter 2 aufgrund des Signals des Temperaturfühlers 1 den Brenner ausschalten und beispielsweise die Heizungsanlage auf individuelle Elektroheizung umstellen, d. h. jeder Radiator 6 spricht auf einen am Radiator 6 oder im jeweiligen Raum angeordneten Temperaturfühler oder Thermostat 9 an und schaltet aufgrund des Signals des Thermostaten 9 das elektrische Heizelement 10 im Radiator 6 ein oder aus. Der Thermostat 9 kann selbstverständlich auch durch einen NTC-Widerstand ersetzt werden.

Durch den Umschalter 2 wurden die Ventile 7 der Radiatoren geschlossen, sodaß eine Zirkulation des Wassers in die Gesamtanlage hinein verhindert wird und jeder Radiator 6 als Einzelheizkörper einsetzbar ist.

Die in den Zeichnungen gezeigten Ventile 11 dienen lediglich zum Absperren der Leitungen 5, wenn ein Radiator 6 ausgewechselt werden muß, sie bleiben über den gesamten Betrieb der Heizungsanlage geöffnet.

Bei der Anlage kann sich eine Steuerzentrale 12 befinden, die die elektrischen Heizelemente 10 individuell steuert bzw. die von ihnen erbrachte Heizung aufrechnet.

Baulich können der Umschalter 2, der Rechner 20, Schaltuhren für die einzelnen Radiatoren und sonstige Schaltelemente in die Steuerzentrale 12 integriert sein.

Der Radiator 6 der erfindungsgemäßen Anlage weist in herkömmlicher Weise ein unteres und ein oberes Sammelrohr 14 und zwischen diesen verlaufende, vertikale Steigrohre 15 auf. Die Sammelrohre 14 und die Steigrohre 15 sind vorteilhaft aus Aluminium, da Aluminium-Heizkörper den geringsten Wasserinhalt haben und daher schnell aufheizbar sind.

Beim oberen Sammelrohr 14 befindet sich ein Wassereinlaß 16, und beim unteren Sammelrohr 14 der Wasserauslaß 17. Beim Wassereinlaß 16 befindet sich das elektrisch gesteuerte Ventil 7, beispielsweise ein Ventil mit thermischem Antrieb.

Im unteren Sammelrohr 14 ist das elektrische Heizelement 10, beispielsweise ein Heizstab, einer elektrischen Heizung angeordnet.

Der Radiator 6 ist weiters mit einem Thermostat 9 versehen, der raumtemperaturabhängig das elektrische Heizelement 10 oder das Ventil 7 steuern kann.

Weiters weist der Radiator 6 eine Schaltuhr 21 auf, die wiederum sowohl das elektrische Heizelement 10 als auch das Ventil 7 beim Wassereinlaß 16 steuert. Weiters ist der Radiator 6 mit einem Anschluß 22 für die Steuerzentrale 12 versehen.

Durch das erfindungsgemäße Steuerungssystem können sämtliche Räume eines Hauses oder einer Wohneinheit individuell beheizt werden. Eine Steuerungszentrale 12 wird insbesondere für den Einsatz in Großanlagen, z. B. bei Verwaltungsgebäuden oder Hotelprojekten, Anwendung finden.

**Patentansprüche**

1. Steuerungssystem für eine Kombinationsheizung, insbesondere Gas- oder Öl-Elektroheizung, mit einer Zentralheizung mit Brenner (3) und Kessel (4) und mehreren daran angeschlossenen Radiatoren (6) od. dgl., die zumindest teilweise mit einem elektrischen Heizelement (10) versehen sind und Schalter und Ventile (7) aufweisen, mittels denen wahlweise ein Radiator (6) mit dem Heizelement (10) als Einzelheizkörper oder über den Kessel (4) als Teil der Zentralheizung betätigbar ist, gekennzeichnet durch einen auf ein Signal eines Temperaturfühlers (1) und vorzugsweise eines Rechners (20) ansprechenden automatischen Umschalter (2), an den der Brenner (3), die elektrisch steuerbaren Ventile (7) der Radiatoren (6) und die elektrischen Heizelemente (10) angeschlossen sind.

2. Steuerungssystem nach Anspruch 1, dadurch gekennzeichnet, daß der Temperaturfühler (1) außerhalb des zu beheizenden Gebäudes angeordnet ist.

3. Steuerungssystem nach Anspruch 1 oder 2, dadurch gekennzeichnet, daß als Temperaturfühler (1) Thermostate eingesetzt sind.

4. Steuerungssystem nach Anspruch 1, dadurch gekennzeichnet, daß der Rechner (20) ein Wärmemengenzähler und/oder Zeitzähler ist.

5. Steuerungssystem nach Anspruch 1, dadurch gekennzeichnet, daß die Radiatoren (6) mit einer Frostschutzsicherung versehen sind.

6. Steuerungssystem nach Anspruch 4, dadurch gekennzeichnet, daß die Frostschutzsicherung die Ventile (7) und/oder die elektrischen Heizelemente (10) steuert.

7. Steuerungssystem nach Anspruch 1, gekennzeichnet durch einen Stundenzähler oder Stromzähler für die elektrischen Heizelemente (10).

8. Steuerungssystem nach Anspruch 1, dadurch gekennzeichnet, daß jeder Radiator (6) mit einem Thermostaten (9) versehen ist, der an das elektrische Heizelement (10) und/oder an das Ventil (7) für den Zentralheizungsanschluß angeschlossen ist.

9. Steuerungssystem nach Anspruch 1, gekennzeichnet durch eine Zeitschaltuhr (21) für eines oder mehrere der elektrischen Heizelemente (10).

10. Steuerungssystem nach Anspruch 9, dadurch gekennzeichnet, daß die Zeitschaltuhr (21) jeweils am Radiator (6) angeordnet ist.

11. Steuerungssystem nach Anspruch 9, dadurch gekennzeichnet, daß die Zeitschaltuhr (21) das Ventil (7) für den Wassereinlaß des Radiators (6) steuert.

12. Steuerungssystem nach einem der Ansprüche 1 bis 11, dadurch gekennzeichnet, daß die Steuerelemente getrennt vom Radiator (6) angeordnet sind.

13. Steuerungssystem nach einem der Ansprüche 1 bis 12, dadurch gekennzeichnet, daß der Umschalter (2) nach Energiekosten und Wirkungsgrad der Anlage einstellbar ist.

14. Steuerungssystem nach einem der Ansprüche 1 bis 12, dadurch gekennzeichnet, daß der Umschalter (2) vom Stromlieferanten ansteuerbar ist und automatisch für eine bestimmte Zeit auf Zentralheizbetrieb mit Öl- oder Gasheizung schaltbar ist.

**Claims**

1. Control system for a combined heating, in particular a gas- or fuel oil-electric heating, comprising a central heating with burner (3) and boiler (4) and several radiators (6) or the like connected thereto which are at least partly provided with an electric heating element (10) and have switches and valves (7) by means of which a radiator (6) is optionally operable as individual radiator with the heating element (10) or *via* the boiler (4) as part of the central heating, characterized by an automatic change-over switch (2) responsive to a signal of a temperature feeler (1) and preferably of a computer (20), the burner (3), the electrically controllable valves (7) of the radiators (6) and the electric heating elements (10) being connected to said change-over switch.

2. Control system according to claim 1, characterized in that the temperature feeler (1) is arranged outside the building to be heated.

3. Control system according to claim 1 or 2, characterized in that thermostats are used as temperature feeler (1).

4. Control system according to claim 1, characterized in that the computer (20) is a calorimeter and/or timecounter.

5. Control system according to claim 1, characterized in that the radiators (6) are provided with frost protection means.

6. Control system according to claim 4, characterized in that the frost protection means control the valves (7) and/or the electric heating elements (10).

7. Control system according to claim 1, characterized by an hour counter or current meter for the electric heating elements (10).

8. Control system according to claim 1, characterized in that each radiator (6) is provided with a thermostat (9) which is connected to the electric heating element (10) and/or to the valve (7) for the central heating.

9. Control system according to claim 1, characterized by a time switch clock (21) for one or several heating elements (10).

10. Control system according to claim 9, characterized in that the time switch clock (21) is arranged at each radiator (6).

11. Control system according to claim 9, characterized in that the time switch clock (21) controls the valve (7) for the water inlet of the radiator (6).

12. Control system according to one of claims 1 to 11, characterized in that the control elements are arranged separately from the radiator (6).

13. Control system according to one of claims 1 to 12, characterized in that the change-over switch (2) is adjustable according to the costs of energy and the efficiency of the unit.

14. Control system according to one of claims 1 to 12, characterized in that the change-over switch (2) is controllable by the supplier of electric power and automatically switchable to oil- or gas-operated central heating for a certain period of time.

**Revendications**

1. Système de commande pour un chauffage mixte, notamment un chauffage électrique et à gaz ou mazout, comportant un chauffage central possédant un brûleur (3) et une chaudière (4) et plusieurs radiateurs (6) ou analogues, qui s'y trouvent raccordés et qui sont équipés au moins en partie d'un organe de chauffage électrique (10) et comportent des commutateurs et des vannes (7), à l'aide desquels un radiateur (6) muni de l'organe de chauffage (10) peut être mis en marche au choix en tant qu'organe de chauffage individuel ou bien, par l'intermédiaire de la chaudière (4), en tant que partie du chauffage central, caractérisé par un commutateur inverseur automatique (2) répondant à un signal d'un capteur de température (1) et de préférence d'un calculateur (20) et auquel le brûleur (3), les vannes (7) à commande électrique des radiateurs (6) et les organes de chauffage électrique (10) sont raccordés.

2. Système de commande selon la revendication 1, caractérisé en ce que le capteur de température (1) est disposé à l'extérieur du bâtiment devant être chauffé.

3. Système de commande selon la revendication 1 ou 2, caractérisé en ce qu'on utilise des thermostats comme capteurs de température (1).

4. Système de commande selon la revendication 1, caractérisé en ce que le calculateur (20) est un compteur de quantité de chaleur et/ou une minuterie.

5. Système de commande selon la revendication 1, caractérisé en ce que les radiateurs (6) sont équipés d'un dispositif de protection contre le gel.

6. Système de commande selon la revendication 4, caractérisé en ce que le dispositif de protection contre le gel commande les vannes (7) et/ou les organes de chauffage électrique (10).

7. Système de commande selon la revendication 1, caractérisé par un compteur horaire ou un compteur de courant pour les organes de chauffage électrique (10).

8. Système de commande selon la revendication 1, caractérisé en ce que chaque radiateur (6) est muni d'un thermostat (9) qui est raccordé à l'organe de chauffage électrique (10) et/ou à la vanne (7) pour le raccordement du chauffage central.

9. Système de commande selon la revendication 1, caractérisé par une minuterie (21) pour un ou plusieurs des organes de chauffage électrique (10).

10. Système de commande selon la revendication 9, caractérisé en ce que la minuterie (21) est associée à chaque radiateur (6).

11. Système de commande selon la revendication 9, caractérisé en ce que la minuterie (21) commande la vanne (7) pour l'admission d'eau dans le radiateur (6).

12. Système de commande selon l'une des revendications 1 à 11, caractérisé en ce que les organes de commande sont montés séparément par rapport aux radiateurs (6).

13. Système de commande selon l'une des revendications 1 à 12, caractérisé en ce que le commutateur inverseur (2) peut être réglé en fonction du coût de l'énergie et du rendement de l'installation.

14. Système de commande selon l'une des revendications 1 à 12, caractérisé en ce que le commutateur inverseur (2) peut être commandé par l'entreprise fournissant le courant et peut être commuté de façon automatique pendant un intervalle de temps déterminé, sur le fonctionnement du chauffage central avec chauffage au mazout ou chauffage au gaz.

Fig. 1

Fig 2

0 160 638